# EUROPEAN PATENT APPLICATION

(11) **EP 4 745 148 A1**
(43) Date of publication of application: **20.05.2026**
(21) Application number: 24857988.0
(22) Date of filing: 25.06.2024
(51) Int. Cl.: C07F 9/6593, H01M 10/0567

(54) **CYCLOPHOSPHAZENE COMPOUND CONTAINING TRIPHENYLSILYL SIDE GROUP, AND PREPARATION METHOD THEREFOR AND USE THEREOF**

(30) Priority: 25.08.2023 CN 202311090689
(71) Applicant: Dongfeng Motor Group Co., Ltd., Wuhan, Hubei 430000 (CN)
(72) Inventor: PI, Zhichao, Wuhan, Hubei 430000 (CN); CHANG, Zenghua, Beijing 101407 (CN); ZHANG, Wei, Wuhan, Hubei 430000 (CN); GOU, Bin, Wuhan, Hubei 430000 (CN); YANG, Man, Beijing 101407 (CN)
(74) Representative: Santarelli
(86) International application number: PCT/CN2024/101340
(87) International publication number: WO 2025/044444

(57) **Abstract**

The present application relates to the technical field of flame retardants for electrolyte solutions, and particularly relates to a cyclophosphazene compound containing a triphenylsilyl side group, and a preparation method therefor and the use thereof. At least one phenylsilyl side group is connected to a phosphorus atom in the cyclophosphazene compound, and the phosphorus atom and the phenylsilyl side group are connected by means of an oxygen atom. The structural formula of the cyclophosphazene compound is as represented by formula 1, wherein, in the formula 1, R1 is a halogen atom or a trifluoroethanol group, and R2 is at least one of a halogen atom, a trifluoroethanol group and a silicon-benzene structure. The cyclophosphazene compound can organically combine improvements in the flame retardance, the film-forming property, the overcharge prevention capability and the acid-removing capability of the electrolyte solution; and since the cyclophosphazene compound has good flame retardance, the cyclophosphazene compound can be added to an electrolyte solution at a relatively low addition amount without influencing the performance of the electrolyte solution.

## Description

### CROSS-REFERENCE TO RELATED APPLICATIONS

The present application claims priority to Chinese Patent Application No. 202311090689.7 filed on August 25, 2023, which is incorporated herein by reference in its entirety.

### Technical Field

The present application relates to the technical field of flame retardants for electrolyte solutions, and particularly relates to a cyclophosphazene compound containing a triphenylsilyl side group, and a preparation method therefor and the use thereof.

### Background of the Invention

Currently, lithium batteries are one of the most widely used chemical energy storage methods and have been extensively applied in consumer-grade digital electronic devices, new energy vehicles, energy storage base stations, aerospace and military equipment, among other fields. As one of the core materials of lithium-ion batteries, electrolyte solutions play a crucial role. The electrolyte solutions consist of three parts: lithium salt, solvent, and functional additives, among which the functional additives can play a significant role in the energy density, cycle life, safety performance, and operating temperature range of lithium batteries. Based on their function, the functional additives of the electrolyte solutions can be classified into flame retardant additives, cathode protective agents, lithium salt stabilisers, anti-corrosion agents, SEI film-forming agents, and the like, among which the flame retardant additives are primarily used to improve the safety of the electrolyte solutions without significantly degrading battery performance. Currently, most flame retardants used in electrolyte solutions are organophosphorus flame retardants, such as trimethyl phosphate (TMP), tributyl phosphate (TBP), and cyclophosphazene compounds. The cyclophosphazene compounds are considered relatively ideal flame retardants due to the presence of a cyclic structure, which results in a higher phosphorus content in the flame retardants, thereby enhancing the flame-retardant effect and allowing for a reduction in the consumption of flame retardants.

Despite these characteristics of cyclophosphazene compounds, the addition amount of cyclophosphazene in electrolyte solutions must reach over 10% to achieve a satisfactory flame-retardant effect. However, in this addition amount, various performance indicators of lithium batteries can be adversely affected by the additive, such as increased impedance and reduced cycle life. Therefore, how to provide a cyclophosphazene compound containing a triphenylsilyl side group to reduce the required addition amount of the cyclophosphazene compound is a technical problem that urgently needs to be solved.

### Summary of the Invention

The present application provides a cyclophosphazene compound containing a triphenylsilyl side group, and a preparation method therefor and use thereof, so as to solve the technical problem of excessively high addition amounts of cyclophosphazene compounds in functional additives of electrolyte solutions in the prior art.

In a first aspect, the present application provides a cyclophosphazene compound containing a triphenylsilyl side group, where at least one phenylsilyl side group is connected to a phosphorus atom in the cyclophosphazene compound, and the phosphorus atom and the phenylsilyl side group are connected by means of an oxygen atom;

the structural formula of the cyclophosphazene compound is as represented by formula 1, 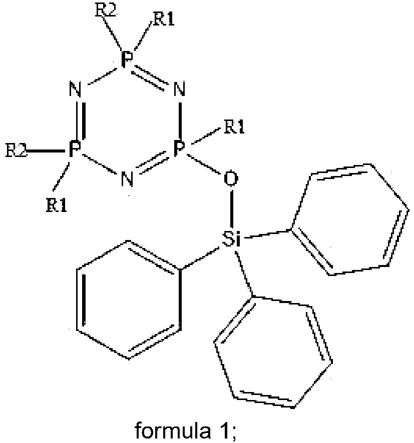 where in the formula 1,
R1 is a halogen atom or a trifluoroethanol group; and
R2 is at least one of a halogen atom, a trifluoroethanol group, and a silicon-benzene structure.

Optionally, the cyclophosphazene compound has a molecular structure as represented by formula 2,

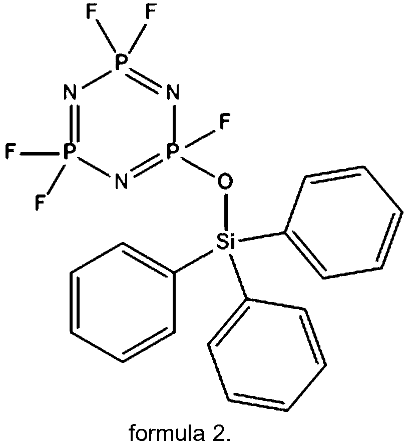

Optionally, the cyclophosphazene compound has a molecular structure as represented by formula 3,

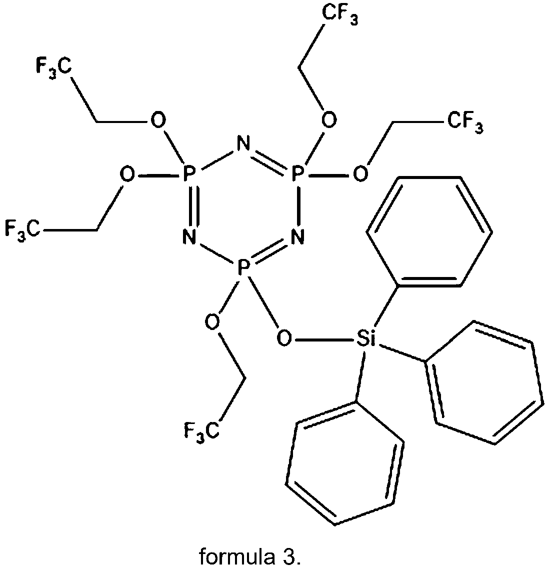

In a second aspect, the present application provides a method for preparing the cyclophosphazene compound according to the first aspect, the method including:
adding triphenylsilanol to an organic suspension liquid of a strong base, and subjecting same to primary stirring, so as to obtain a first mixed solution containing a triphenylsilanol organic salt;
adding the first mixed solution to a phosphonitrilic chloride trimer, subjecting same to secondary stirring, and then subjecting same to tertiary stirring and filtration, so as to obtain a first filtrate; and
subjecting the first filtrate to vacuum drying, so as to obtain the cyclophosphazene compound;
where solvents for the strong base, the phosphonitrilic chloride trimer, and the first mixed solution are each a low-boiling-point inert aprotic solvent.

Optionally, a molar ratio of the triphenylsilanol organic salt to the phosphonitrilic chloride trimer is 1 to 6.

In a third aspect, the present application provides another method for preparing the cyclophosphazene compound according to the first aspect, the method including:
adding triphenylsilanol to an organic suspension liquid of a strong base, and subjecting same to primary stirring, so as to obtain a first mixed solution containing a triphenylsilanol organic salt;
adding trifluoroethanol to an organic suspension liquid of a strong base, and subjecting same to primary stirring, so as to obtain a second mixed solution containing a trifluoroethanol organic salt;
adding the first mixed solution to a phosphonitrilic chloride trimer, subjecting same to secondary stirring, then adding the second mixed solution and subjecting same to the secondary stirring, and then subjecting same to tertiary stirring and filtration, so as to obtain a second filtrate; and
subjecting the second filtrate to vacuum drying, so as to obtain the cyclophosphazene compound;
where solvents for the strong base, the first mixed solution, the second mixed solution, and the phosphonitrilic chloride trimer are each a low-boiling-point inert aprotic solvent.

Optionally, the second mixed solution, the first mixed solution, and the phosphonitrilic chloride trimer satisfy:
M + N = 6Q, and M:N = 5 to 1/5;
where M represents a molar amount of the trifluoroethanol organic salt; N represents a molar amount of the triphenylsilanol organic salt; and Q represents a molar amount of the phosphonitrilic chloride trimer.

Optionally, the low-boiling-point inert aprotic solvent includes at least one of tetrahydrofuran, diethyl ether, acetone, dioxolane, dioxane, toluene, and xylene.

Optionally, the primary stirring lasts for 4 h to 12 h; and/or,
the secondary stirring lasts for 4 h to 24 h; and/or,
the tertiary stirring lasts for 12 h to 24 h at 30°C to 60°C.

In a fourth aspect, the present application provides use of a cyclophosphazene compound containing a triphenylsilyl side group, the use including the cyclophosphazene compound according to the first aspect being used as a flame retardant of an electrolyte solution for lithium batteries.

Compared with the prior art, the aforementioned technical solutions provided by the present application have the following advantages:

the cyclophosphazene compound containing a triphenylsilyl side group provided in the present application introduces a phenylsilyl side group onto its phosphorus atom compared with conventional cyclotriphosphazene-based flame retardants, and connects the silicon atom of the phenylsilyl side group to the phosphorus atom by means of an oxygen atom. On the one hand, this increases the overall bond energy of the cyclophosphazene compound, thereby reducing the release of flammable gases, increasing the flash point of the cyclophosphazene compound, and consequently raising the overall flash point of the electrolyte solution. On the other hand, the siloxane structure formed by the silicon and oxygen atoms also possesses good film-forming properties, enabling the flame retardant to form a film rapidly in the electrolyte solution and improving the film-forming property of the electrolyte solution. Simultaneously, the phenylsilyl side group can effectively scavenge hydrogen fluoride and phosphorus pentafluoride generated during the operation of the electrolyte solution, enhancing the acid-removing capability of the electrolyte solution. Furthermore, the introduction of the phenyl ring, in conjunction with the polymerisation-promoting effect of the oxygen atom, can also impart an overcharge prevention effect to the electrolyte solution containing the cyclophosphazene compound, further improving the flame retardance of the electrolyte solution. Therefore, the aforementioned cyclophosphazene compound containing a triphenylsilyl side group can organically combine improvements in the flame retardance, the film-forming property, the overcharge prevention capability and the acid-removing capability of the electrolyte solution; and since the cyclophosphazene compound has good flame retardance, the cyclophosphazene compound can be added to an electrolyte solution at a relatively low addition amount without influencing the performance of the electrolyte solution.

### Brief Description of the Drawings

The accompanying drawings herein are incorporated into and constitute a part of the specification, illustrate embodiments consistent with the present application, and together with the specification, serve to explain the principles of the present application.

To describe the technical solutions in the embodiments of the present application or in the prior art more clearly, the following will provide a brief introduction to the accompanying drawings required for describing the embodiments or the prior art. Apparently, a person of ordinary skill in the art may still derive other drawings from these accompanying drawings without making creative efforts.
FIG. 1 is a schematic flowchart of one method for preparing a cyclophosphazene compound containing a triphenylsilyl side group provided by an embodiment of the present application; and
FIG. 2 is a schematic flowchart of another method for preparing a cyclophosphazene compound containing a triphenylsilyl side group provided by an embodiment of the present application.

### Detailed Description of Embodiments

To clarify the objectives, technical solutions, and advantages of the embodiments of the present application, the technical solutions in the embodiments of the present application will be clearly and completely described below with reference to the accompanying drawings in the embodiments of the present application. Apparently, the described embodiments are merely some rather than all of the embodiments of the present application. All other embodiments obtained by a person of ordinary skill in the art based on the embodiments of the present application without making creative efforts shall fall within the scope of protection of the present application.

Unless otherwise specified, various raw materials, reagents, instruments, and apparatuses used in the present application may be commercially purchased or may be prepared by existing methods.

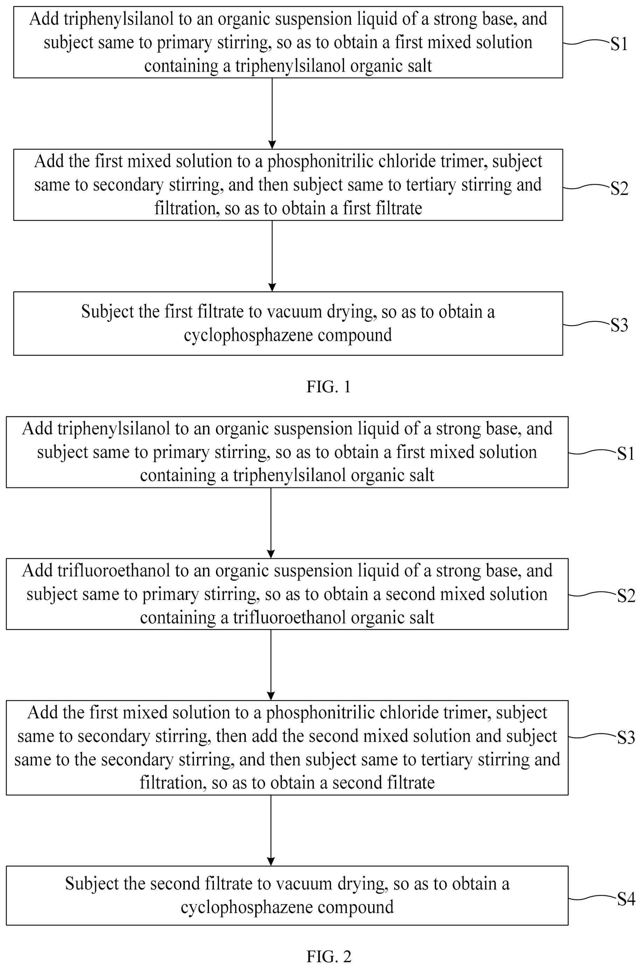

As shown in FIG. 1, an embodiment of the present application provides a cyclophosphazene compound containing a triphenylsilyl side group, where at least one phenylsilyl side group is connected to a phosphorus atom in the cyclophosphazene compound, and the phosphorus atom and the phenylsilyl side group are connected by means of an oxygen atom;
the structural formula of the cyclophosphazene compound is as represented by formula 1, 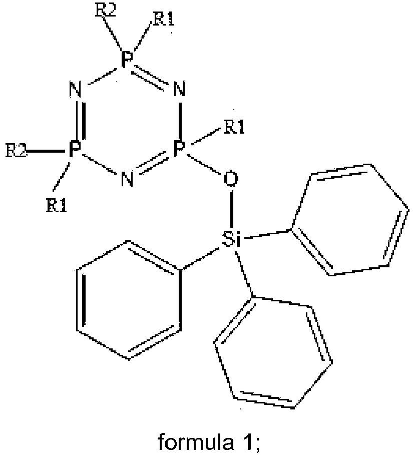 where in the formula 1,
R1 is a halogen atom or a trifluoroethanol group; and
R2 is at least one of a halogen atom, a trifluoroethanol group, and a silicon-benzene structure.

In the embodiment of the present application, by grafting a phenylsilyl side group onto the phosphorus atom of a cyclotriphosphazene-based flame retardant, and further connecting the silicon atom in the phenylsilyl side group to the phosphorus atom by means of an oxygen atom, it is possible not only to effectively reduce the release of flammable gases but also to increase the flash point of the flame retardant, thereby raising the flash point of the electrolyte solution. Consequently, under equivalent flame retardance requirements, the addition amount of the flame retardant can be effectively reduced.

The phenylsilyl side group is a type of phenylsilanyl group that takes a silicon atom as the central active group, with three branches of the silicon atom connected to phenyl groups.

In some optional embodiments, the cyclophosphazene compound has a molecular structure as represented by formula 2,

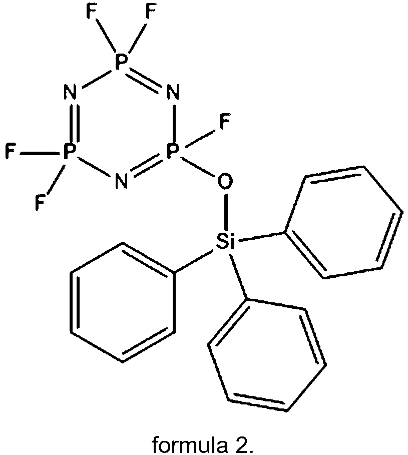

In the embodiment of the formula 2 of the present application, by specifically defining both R1 and R2 groups in the formula 1 as F, pentakis(fluorotriphenylsiloxy) cyclotriphosphazene can be obtained. Since both the R1 and R2 groups are halogen atoms, the pentakis(fluorotriphenylsiloxy) cyclotriphosphazene exhibits good flame retardance and can effectively increase the flash point of the electrolyte solution. Therefore, under equivalent flame retardance requirements, the addition amount of the flame retardant can be effectively reduced.

Simultaneously, the phenylsilyl side group can scavenge hydrogen fluoride and phosphorus pentafluoride in the electrolyte solution, thereby improving the acid-removing capability of the electrolyte solution. Moreover, the siloxane structure possesses a good film-forming property, and the introduction of the phenyl ring, in combination with the polymerisation-promoting effect of the oxygen atom, can impart an overcharge prevention effect to the electrolyte solution containing the cyclophosphazene compound.

In some optional embodiments, the cyclophosphazene compound has a molecular structure as represented by formula 3,

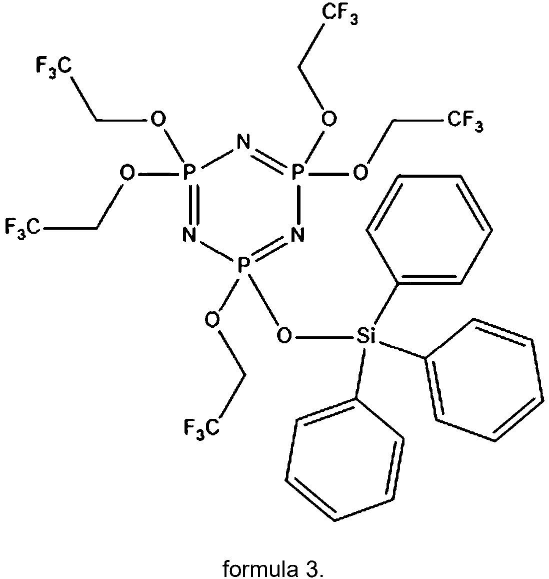

In the embodiment of the formula 3 of the present application, by defining the R1 group in the formula 1 as a trifluoroethanol group and the R2 group as a trifluoroethanol group, a phosphazene derivative co-substituted with triphenylsilanol can be obtained. Since the derivative contains multiple trifluoroethanol groups, it can significantly increase the bond energy of the flame retardant and enhance its flame retardance, effectively raising the flash point of the electrolyte solution. Therefore, under equivalent flame retardance requirements, the addition amount of the flame retardant can be effectively reduced.

Simultaneously, the phenylsilyl side group can scavenge hydrogen fluoride and phosphorus pentafluoride in the electrolyte solution, thereby improving the acid-removing capability of the electrolyte solution. Moreover, the siloxane structure possesses a good film-forming property, and the introduction of the phenyl ring, in combination with the polymerisation-promoting effect of the oxygen atom, can impart an overcharge prevention effect to the electrolyte solution containing the cyclophosphazene compound.

As shown in FIG. 1, based on a general inventive concept, an embodiment of the present application provides a method for preparing the cyclophosphazene compound, the method including:
S1: adding triphenylsilanol to an organic suspension liquid of a strong base, and subjecting same to primary stirring, so as to obtain a first mixed solution containing a triphenylsilanol organic salt;
S2: adding the first mixed solution to a phosphonitrilic chloride trimer, subjecting same to secondary stirring, and then subjecting same to tertiary stirring and filtration, so as to obtain a first filtrate; and
S3: subjecting the first filtrate to vacuum drying, so as to obtain the cyclophosphazene compound;
where solvents for the strong base, the phosphonitrilic chloride trimer, and the first mixed solution are each a low-boiling-point inert aprotic solvent.

In the embodiment of the present application, the strong base refers to a basic oxide with a pH higher than that of sodium hydroxide, including alkali metal hydrides such as sodium hydride or lithium hydride.

The low-boiling-point inert aprotic solvent refers to a type of inert solvent in which autoprotolysis is extremely weak or non-existent, and such solvents have a relatively low boiling point. Therefore, the corresponding organic salt mixed solution can be generated during the reaction stage, facilitating the subsequent production of a pentakis(fluorotriphenylsiloxy) cyclotriphosphazene product with a molecular structure as represented by formula 2.

The cation in the triphenylsilanol organic salt corresponds to the cation used in the strong base. For example, when sodium hydride is used as the strong base, the resulting first mixed solution contains sodium triphenylsilanolate; when lithium hydride is used as the strong base, the resulting first mixed solution contains lithium triphenylsilanolate.

The method is directed to the preparation method for the aforementioned cyclophosphazene compound. For the specific structure of the cyclophosphazene compound, reference may be made to the above-mentioned embodiments. Since the method employs part or all of the technical solutions of the above-mentioned embodiments, it at least possesses all the beneficial effects brought about by the technical solutions of the above-mentioned embodiments, which will not be elaborated herein.

In some optional embodiments, a molar ratio of the triphenylsilanol organic salt to the phosphonitrilic chloride trimer is 1 to 6.

In the embodiment of the present application, by controlling the specific molar ratio of the triphenylsilanol organic salt to the phosphonitrilic chloride trimer, the reaction between the triphenylsilanol organic salt and the phosphonitrilic chloride trimer can proceed to completion in the low-boiling-point inert aprotic solvent, thereby yielding the pentakis(fluorotriphenylsiloxy) cyclotriphosphazene product as represented by formula 2.

The molar ratio may be 1, 2, 3, 4, 5, or 6.

As shown in FIG. 2, based on a general inventive concept, an embodiment of the present application provides another method for preparing the cyclophosphazene compound, the method including:
S1: adding triphenylsilanol to an organic suspension liquid of a strong base, and subjecting same to primary stirring, so as to obtain a first mixed solution containing a triphenylsilanol organic salt;
S2: adding trifluoroethanol to an organic suspension liquid of a strong base, and subjecting same to primary stirring, so as to obtain a second mixed solution containing a trifluoroethanol organic salt;
S3: adding the first mixed solution to a phosphonitrilic chloride trimer, subjecting same to secondary stirring, then adding the second mixed solution and subjecting same to the secondary stirring, and then subjecting same to tertiary stirring and filtration, so as to obtain a second filtrate; and
S4: subjecting the second filtrate to vacuum drying, so as to obtain the cyclophosphazene compound;
where solvents for the strong base, the first mixed solution, the second mixed solution, and the phosphonitrilic chloride trimer are each a low-boiling-point inert aprotic solvent.

In the embodiment of the present application, the strong base refers to a basic oxide with a pH higher than that of sodium hydroxide, including alkali metal hydrides such as sodium hydride or lithium hydride.

The low-boiling-point inert aprotic solvent refers to a type of inert solvent in which autoprotolysis is extremely weak or non-existent, and such solvents have a relatively low boiling point. Therefore, the corresponding organic salt mixed solution can be generated during the reaction stage, facilitating the subsequent production of a pentakis(fluorotriphenylsiloxy) cyclotriphosphazene product with a molecular structure as represented by formula 2.

The cation in the triphenylsilanol organic salt corresponds to the cation used in the strong base. For example, when sodium hydride is used as the strong base, the resulting first mixed solution contains sodium triphenylsilanolate; when lithium hydride is used as the strong base, the resulting first mixed solution contains lithium triphenylsilanolate.

The cation in the trifluoroethanol organic salt corresponds to the cation used in the strong base. For example, when sodium hydride is used as the strong base, the resulting first mixed solution contains sodium trifluoroethanol; when lithium hydride is used as the strong base, the resulting first mixed solution contains lithium trifluoroethanol.

The method is directed to the preparation method for the aforementioned cyclophosphazene compound. For the specific structure of the cyclophosphazene compound, reference may be made to the above-mentioned embodiments. Since the method employs part or all of the technical solutions of the above-mentioned embodiments, it at least possesses all the beneficial effects brought about by the technical solutions of the above-mentioned embodiments, which will not be elaborated herein.

In some optional embodiments, the second mixed solution, the first mixed solution, and the phosphonitrilic chloride trimer satisfy:
M + N = 6Q, and M:N = 5 to 1/5;
where M represents a molar amount of the trifluoroethanol organic salt; N represents a molar amount of the triphenylsilanol organic salt; and Q represents a molar amount of the phosphonitrilic chloride trimer.

In the embodiment of the present application, by controlling the specific molar ratio of the trifluoroethanol organic salt, the triphenylsilanol organic salt, and the phosphonitrilic chloride trimer, the reaction among the trifluoroethanol organic salt, the triphenylsilanol organic salt, and the phosphonitrilic chloride trimer can proceed to completion, thereby yielding the phosphazene derivative co-substituted with triphenylsilanol as represented by formula 3.

The molar ratio may be 5:5, 4:5, 3:5, 2:5, or 1:5.

In some optional embodiments, the low-boiling-point inert aprotic solvent includes at least one of tetrahydrofuran, diethyl ether, acetone, dioxolane, dioxane, toluene, and xylene.

In the embodiment of the present application, by controlling the exact type of the low-boiling-point inert aprotic solvent, the reaction between the sodium/lithium triphenylsilanolate and the phosphonitrilic chloride trimer, or among the sodium/lithium trifluoroethanol, the sodium/lithium triphenylsilanolate, and the phosphonitrilic chloride trimer, can proceed to completion in the low-boiling-point inert aprotic solvent, thereby yielding the cyclophosphazene compound with the structure as represented by formula 2 or formula 3.

In some optional embodiments, the primary stirring lasts for 4 h to 12 h; and/or,
the secondary stirring lasts for 4 h to 24 h; and/or,
the tertiary stirring lasts for 12 h to 24 h at 30°C to 60°C.

In the embodiment of the present application, by controlling the specific duration of the primary stirring, thorough mixing between the strong base and the triphenylsilanol can be ensured, yielding the first mixed solution containing the triphenylsilanol organic salt, thereby facilitating subsequent reactions.

The primary stirring may last for 4 h, 6 h, 8 h, 10 h, or 12 h.

By controlling the specific duration of the secondary stirring and the specific temperature and duration of the tertiary stirring, thorough mixing of the triphenylsilanol organic salt with the phosphonitrilic chloride trimer can be ensured, allowing the reaction to proceed; or further thorough mixing of the trifluoroethanol organic salt with the triphenylsilanol organic salt and the phosphonitrilic chloride trimer can be ensured, followed by completion of the subsequent reaction via the tertiary stirring, thereby yielding either the pentakis(fluorotriphenylsiloxy) cyclotriphosphazene product as represented by formula 2 or the phosphazene derivative co-substituted with triphenylsilanol as represented by formula 3.

The secondary stirring may last for 4 h, 6 h, 8 h, 10 h, 12 h, 14 h, 16 h, 18 h, 20 h, 22 h, or 24 h.

The tertiary stirring may last for 12 h, 14 h, 16 h, 18 h, 20 h, 22 h, or 24 h.

The tertiary stirring may be performed at a temperature of 30°C, 35°C, 40°C, 45°C, 50°C, 55°C, or 60°C.

Based on a general inventive concept, in some further embodiments, the present application provides use of a cyclophosphazene compound containing a triphenylsilyl side group, the use including the cyclophosphazene compound being used as a flame retardant of an electrolyte solution for lithium batteries.

In the embodiment of the present application, the electrolyte solution for lithium batteries consists of a lithium salt, an organic solvent, a phosphazene-derivative flame retardant additive, and other functional additives.

The phosphazene-derivative flame retardant additive is a phosphazene derivative co-substituted with triphenylsilanol and/or pentakis(fluorotriphenylsiloxy) cyclotriphosphazene.

The lithium salt includes at least one of LiPF₆, LiClO₄, LiAsF₆, LiBF₄, LiCH₃SO₃, LiCF₃SO₃, LiBOB, LiDFOB, LiN(FSO₂)₂, and LiN(CF₃SO₂)₂.

The organic solvent includes at least one of a carbonate-based organic solvent, an ether-based organic solvent, a carboxylic ester-based organic solvent, a phosphate-based organic solvent, and a fluorinated organic solvent, where the carbonate-based organic solvent is a cyclic carbonate compound and/or a linear carbonate compound.

The cyclic carbonate compound includes at least one of ethylene carbonate (EC), propylene carbonate (PC), γ-butyrolactone (GBL), and butylene carbonate.

The linear carbonate compound includes at least one of dimethyl carbonate (DMC), diethyl carbonate (DEC), dipropyl carbonate, ethyl methyl carbonate (EMC), and carbonate derivatives synthesized from linear or branched monohydric aliphatic alcohols with 3 to 8 carbon atoms and carbonic acid.

The ether-based organic solvent includes at least one of tetrahydrofuran (THF), 2-methyltetrahydrofuran, 1,3-dioxolane, dimethoxymethane, 1,2-dimethoxyethane, diethylene glycol dimethyl ether, triethylene glycol dimethyl ether, and tetraethylene glycol dimethyl ether.

The carboxylic ester-based organic solvent includes at least one of methyl formate, ethyl formate, ethyl acetate (EA), methyl propionate (MP), ethyl propionate (EP), propyl propionate (PP), methyl butyrate (MB), ethyl butyrate (EB), propyl butyrate (PB), and butyl butyrate (BB).

The phosphate-based organic solvent is selected from at least one of trimethyl phosphate (TMP), triethyl phosphate (TEP), and tributyl phosphate (TBP).

The other functional additives are well-known to those skilled in the art and include at least one of vinylene carbonate (VC), vinyl ethylene carbonate (VEC), fluoroethylene carbonate (FEC), 1,3-propane sultone (PS), 1-propene-1,3-sultone (PST), 1,4-butane sultone (BS), ethylene sulfate (DTD), adiponitrile (ADN), and succinonitrile (SN).

The use is implemented based on the aforementioned cyclophosphazene compound. For the specific structure of the cyclophosphazene compound, reference may be made to the above-mentioned embodiments. Since the use employs part or all of the technical solutions of the above-mentioned embodiments, it at least possesses all the beneficial effects brought about by the technical solutions of the above-mentioned embodiments, which will not be elaborated herein.

The present application will be described in further detail with reference to specific examples. It should be understood that these examples are merely intended to illustrate the present application and not to limit the scope thereof. The experimental methods in the following examples are generally carried out in accordance with national standards if no specific conditions are indicated herein. If there is no corresponding national standard, general international standards, conventional conditions, or conditions recommended by the manufacturer should be followed.

### Example 1

As shown in FIG. 2, under ice-bath conditions, 50.2 g of trifluoroethanol was added dropwise to a tetrahydrofuran suspension liquid containing 12 g of sodium hydride, followed by primary stirring for 10 h to obtain a tetrahydrofuran solution of sodium trifluoroethoxide;
under ice-bath conditions, a tetrahydrofuran solution of 27.6 g of triphenylsilanol was added dropwise to a tetrahydrofuran suspension liquid containing 12 g of sodium hydride, followed by primary stirring for 10 h to obtain a tetrahydrofuran solution of sodium triphenylsilanolate;
under ice-bath conditions, the prepared tetrahydrofuran solution of sodium triphenylsilanolate was added to a tetrahydrofuran solution containing 34.76 g of a phosphonitrilic chloride trimer, followed by secondary stirring for 24 h, and then the tetrahydrofuran solution of sodium trifluoroethoxide was added dropwise, followed by the secondary stirring for 24 h, and subsequently tertiary stirring was continued at 60°C for 24 h; and
filtration and vacuum drying were carried out to obtain a phosphazene derivative co-substituted with triphenylsilanol (as represented by formula 3), with a product yield of 83%.

### Example 2

Example 2 differs from Example 1 in that:
as shown in FIG. 2, under ice-bath conditions, 50.2 g of trifluoroethanol was added dropwise to a tetrahydrofuran suspension liquid containing 12 g of sodium hydride, followed by primary stirring for 12 h to obtain a tetrahydrofuran solution of sodium trifluoroethoxide;
under ice-bath conditions, a tetrahydrofuran solution of 69.1 g of triphenylsilanol was added dropwise to a tetrahydrofuran suspension liquid containing 6 g of sodium hydride, followed by primary stirring for 12 h to obtain a tetrahydrofuran solution of sodium triphenylsilanolate;
under ice-bath conditions, the prepared tetrahydrofuran solution of sodium triphenylsilanolate was added to a tetrahydrofuran solution containing 43.45 g of a phosphonitrilic chloride trimer, followed by secondary stirring for 20 h, and then the tetrahydrofuran solution of sodium trifluoroethoxide was added dropwise, followed by the secondary stirring for 20 h, and subsequently tertiary stirring was continued at 50°C for 20 h; and
filtration and vacuum drying were carried out to obtain a phosphazene derivative co-substituted with triphenylsilanol (as represented by formula 3), with a product yield of 79%.

### Example 3

Example 3 differs from Example 1 in that:
as shown in FIG. 2, under ice-bath conditions, 50.2 g of trifluoroethanol was added dropwise to a dioxane suspension liquid containing 12 g of lithium hydride, followed by primary stirring for 8 h to obtain a dioxane solution of lithium trifluoroethoxide;
under ice-bath conditions, a dioxane solution of 138.2 g of triphenylsilanol was added dropwise to a dioxane suspension liquid containing 12 g of lithium hydride, followed by primary stirring for 8 h to obtain a dioxane solution of lithium triphenylsilanolate;
under ice-bath conditions, the prepared dioxane solution of lithium triphenylsilanolate was added to a dioxane solution containing 57.94 g of a phosphonitrilic chloride trimer, followed by secondary stirring for 18 h, and then the dioxane solution of lithium trifluoroethoxide was added dropwise, followed by the secondary stirring for 18 h, and subsequently tertiary stirring was continued at 50°C for 18 h; and
filtration and vacuum drying were carried out to obtain a phosphazene derivative co-substituted with triphenylsilanol (as represented by formula 3), with a product yield of 71%.

### Example 4

Example 4 differs from Example 1 in that:
as shown in FIG. 1, under ice-bath conditions, a tetrahydrofuran solution of 165.8 g of triphenylsilanol was added dropwise to a tetrahydrofuran suspension liquid containing 14.39 g of sodium hydride, followed by primary stirring for 12 h to obtain a tetrahydrofuran solution of sodium triphenylsilanolate;
under ice-bath conditions, the prepared tetrahydrofuran solution of sodium triphenylsilanolate was added to a tetrahydrofuran solution containing 149.32 g of a phosphonitrilic chloride trimer, followed by secondary stirring for 24 h, and subsequently tertiary stirring was continued at 60°C for 24 h; and
filtration and vacuum drying were carried out to obtain pentakis(fluorotriphenylsiloxy) cyclotriphosphazene (as represented by formula 2), with a product yield of 94%.

### Example 5

Example 5 differs from Example 1 in that:
under ice-bath conditions, a tetrahydrofuran solution of 165.8 g of triphenylsilanol was added dropwise to a dioxolane suspension liquid containing 14.39 g of lithium hydride, followed by primary stirring for 10 h to obtain a dioxolane solution of lithium triphenylsilanolate;
under ice-bath conditions, the prepared dioxolane solution of lithium triphenylsilanolate was added to a dioxolane solution containing 74.66 g of a phosphonitrilic chloride trimer, followed by secondary stirring for 16 h, and subsequently tertiary stirring was continued at 50°C for 16 h; and
filtration and vacuum drying were carried out to obtain pentakis(fluorotriphenylsiloxy) cyclotriphosphazene (as represented by formula 2), with a product yield of 88%.

### Example 6

Example 6 differs from Example 1 in that:
under ice-bath conditions, a toluene solution of 165.8 g of triphenylsilanol was added dropwise to a toluene suspension liquid containing 14.39 g of lithium hydride, followed by primary stirring for 8 h to obtain a toluene solution of lithium triphenylsilanolate;
under ice-bath conditions, the prepared toluene solution of lithium triphenylsilanolate was added to a toluene solution containing 24.88 g of a phosphonitrilic chloride trimer, followed by secondary stirring for 13 h, and subsequently tertiary stirring was continued at 40°C for 13 h; and
filtration and vacuum drying were carried out to obtain pentakis(fluorotriphenylsiloxy) cyclotriphosphazene (as represented by formula 2), with a product yield of 62%.

### Relevant experiments and effect data:

Experiments were conducted using the two cyclotriphosphazene-based flame retardants obtained from Examples 1-6 to investigate the flame-retardant effect, overcharge prevention effect, and battery cycle performance of the added electrolyte solution. The purity of the lithium salt used in the experiments was ≥ 99.9%, the purity of the organic solvents was ≥ 99.98%, and the purity of the additives was ≥ 99.9%. The abbreviations of the various substances are as follows:

Lithium hexafluorophosphate (LiPF₆), lithium difluoro(oxalato)borate (LiDFOB), lithium bis(fluorosulfonyl)imide (LiFSI), lithium bis(trifluoromethanesulfonyl)imide (LiTFSI), lithium bis(oxalato)borate (LiBOB), ethylene carbonate (EC), diethyl carbonate (DEC), ethyl methyl carbonate (EMC), triethyl phosphate (TEP), tetraethylene glycol dimethyl ether (TEGDME), fluoroethylene carbonate (FEC), ethyl 2,2,2-trifluoroacetate (TFEA), diethyl fluorocarbonate (DFDEC), fluoroethyl methyl carbonate (FEMC), vinylene carbonate (VC), 1,3-propane sultone (PS), 1-propene-1,3-sultone (PST), ethylene sulfate (DTD), adiponitrile (ADN), pentakis(fluorotriphenylsiloxy) cyclotriphosphazene as represented by formula 2 (PFTPSiCPN), and triphenylsilanol co-substituted phosphazene as represented by formula 3 (TPSiCPN).

The preparation of the electrolyte solution was carried out in an argon glove box, with moisture and oxygen content in the glove box controlled below 0.5 ppm. One litre of solvent and the lithium salt were mixed in a specific proportion, then a certain amount of additive was added and thoroughly stirred until uniformly mixed.

Upon testing, the moisture content of the electrolyte solution was < 20 ppm, and the free acid content was < 50 ppm.

A 2 Ah battery was assembled in a high-purity argon (99.99%) glove box with moisture and oxygen content both below 0.5 ppm, using a high-nickel electrode sheet as the cathode, a silicon-carbon electrode sheet as the anode, a polyolefin separator, and the selected electrolyte solution. After pre-formation, it was left to stand for 12 h before proceeding to the next test.

Self-extinguishing time test in the experimental examples: 0.5 g of the electrolyte solution was placed in a watch glass with a diameter of 7 cm, and then an igniter was used to ignite it, exposing the electrolyte solution to the flame for 3 s. If ignition occurred, the time interval between the removal of the igniter (after 3 s) and the complete extinguishment of the flame was recorded, and converted to the burning time per unit mass of electrolyte solution (given in s g⁻¹). All measurements were performed five times, and the average value was taken as the self-extinguishing time.

In the experimental examples, constant-current constant-voltage charging/constant-current discharging was employed, and the battery was subjected to charge/discharge testing at a 1C rate.

The results are shown in Table 1.

**Table 1 Composition, Self-extinguishing Time, Overcharge Prevention Performance, and Room-temperature Cycle Performance of Various Electrolyte Solutions**

| Experi mental Group | Component A | Compone nt B | Compon ent C | Component D | Self-ex tinguis hing Time (s/g) | Extensio n Time when Overcha rged to 6 V (h) | Capacity Retention Rate after 1000 Cycles at 25°C (%) |
|---|---|---|---|---|---|---|---|
| | Lithium salt (molar concentration in the electrolyte solution, mol/L) | Solvent (volume ratio) | Mass content (%) | Mass content of other additives in the electrolyte solution (%) | | | |
| 1 | LiPF₆ (1.0M) | EC:DEC (1:1) | 0 | FEC (3) VC | 120 | 0 | 65 |
| | | | | (0.5) PS (1) | | | |
| | | | | LiDFOB (0.5) | | | |
| | LiFSI (0.1M) | | | DTD (0.5) | | | |
| | | | | ADN (0.5) | | | |
| 2 | LiPF₆ (1.0M) | EC:DEC: EMC (1:1:1) | TPSiCP N (3) | VC (0.5) PS (1) | 62 | 4 | 74 |
| | LiDFOB (0.1M) | | | | | | |
| 3 | LiPF₆ (1.0M) | EC:TEP:T FEA (3:2:5) | TPSiCP N (5) | VC (0.5) DTD (0.5) | 0 | 7 | 80 |
| | LiDFOB (0.1M) | | | | | | |
| 4 | LiPF₆ (1.1M) | EC:DEC (1:1) | TPSiCP N (9) | FEC (3) PS (1) | 0 | 10 | 75 |
| | LiFSI (0.1M) | | | | | | |
| 5 | LiPF₆ (1.0M) | EC:DEC:F | TPSiCP | 0 | 0 | 5 | 78 |
| | LiFSI (0.1M) | EMC (3:2:5) | N (4) | | | | |
| 6 | LiPF₆ (1.0M) | EC:EMC: FEC (1:2:1) | TPSiCP N (2) | VC (0.5) PS (1) | 15 | 3 | 90 |
| | LiTFSI (0.1M) | | | LiDFOB (0.5) | | | |
| 7 | LiPF₆ (0.9M) | EC:TEGD | PFTPSi CPN (2) | FEC (3) | 0 | 3 | 87 |
| | | ME:DFDE C (30:20:50) | | | | | |
| | LiBOB (0.1M) | | | DTD (0.5) | | | |
| 8 | LiPF₆ (1.0M) | EC:DEC:F EMC (1:2:1) | PFTPSi CPN (4) | VC (0.5) | 6 | 5 | 86 |
| | LiFSI (0.1M) | | | DTD (0.5) | | | |
| 9 | LiPF₆ (1.0M) | EC:DEC: EMC (1:1:1) | PFTPSi CPN (8) | VC (0.5) PS (1) | 0 | 9 | 72 |
| | LiDFOB (0.1M) | | | | | | |
| 10 | LiPF₆ (1.0M) | EC:TEP:T FEA (3:2:5) | PFTPSi CPN (3) | 0 | 0 | 12 | 70 |
| | LiDFOB (0.1M) | | | | | | |

As can be seen from Table 1, by adding the cyclophosphazene compound containing a triphenylsilyl side group to the electrolyte solution, the flame retardance of the electrolyte solution can be significantly improved. For example, the electrolyte solutions of experimental groups 4 and 9 achieved a completely non-flammable effect (self-extinguishing time of 0 s) after the addition of 8% to 9% of the cyclophosphazene compound, while also exhibiting superior overcharge prevention performance. In contrast, flame-retardant additives in the prior art generally require a mass fraction of 10% to 40% in the electrolyte solution to achieve a satisfactory non-flammable effect. However, a higher mass fraction of flame-retardant additive increases the viscosity of the electrolyte solution, affecting its conductivity and consequently the battery performance of lithium batteries.

Furthermore, as can be seen from Table 1, the addition of the cyclophosphazene compound containing a triphenylsilyl side group to the electrolyte solution can improve the electrical performance of batteries. Even in the absence of other additives, relatively good cycle performance can be maintained, as demonstrated in experimental groups 5 and 10.

In conclusion, while conventional flame-retardant additives can reduce the flammability of electrolyte solutions, the addition of most flame-retardant additives has a significant negative impact on the performance of lithium batteries. Even a small amount of flame-retardant additive can lead to a decline in the performance of lithium batteries.

Whereas, in the embodiments of the present application, when the cyclophosphazene compound containing a triphenylsilyl side group is added to the electrolyte solution as a flame-retardant additive, only a small amount needs to be added. This allows for the improvement of the battery's cycle performance while ensuring superior flame-retardant and overcharge prevention effects. Therefore, the cyclophosphazene compound can reduce the required addition amount of additives in the electrolyte solution, thereby lowering the production cost of the electrolyte solution.

Various embodiments of the present application may exist in the form of a range. It should be understood that the description in the form of a range is merely for convenience and brevity, and should not be construed as a strict limitation on the scope of the present application; therefore, the described range should be considered to have specifically disclosed all possible subranges as well as individual numerical values within that range. For example, a description of a range from 1 to 6 should be considered to have specifically disclosed subranges, such as from 1 to 3, from 1 to 4, from 1 to 5, from 2 to 4, from 2 to 6, and from 3 to 6, as well as individual numbers within that range, such as 1, 2, 3, 4, 5, and 6, regardless of the range. Additionally, whenever a numerical range is indicated herein, it is intended to include any cited numerical value (fractional or integral) within the indicated range.

Unless otherwise specified, as used herein, directional terms such as "up" and "down" specifically refer to the directions in the accompanying drawings. Additionally, in the description of the present application, terms such as "including" and "comprising" mean "including but not limited to". As used herein, relational terms such as "first" and "second" are merely for distinguishing one entity or operation from another entity or operation and do not necessarily require or imply the existence of any such actual relationship or sequence between these entities or operations. As used herein, "and/or" describes an association relationship between associated objects, indicating that three relationships may exist. For example, A and/or B may indicate the following three cases: A exists alone, A and B exist simultaneously, or B exists alone. A and B may be singular or plural. As used herein, "at least one" refers to one or more, and "multiple" refers to two or more. "At least one", "at least one of the following", or similar expressions thereof refer to any combination of these objects, including any combination of single objects or plural objects. For example, "at least one of a, b, or c", or "at least one of a, b, and c" may both mean a, b, c, a-b (i.e., a and b), a-c, b-c, or a-b-c, where a, b, and c may be singular or plural, respectively.

The above merely describes the embodiments of the present application, enabling those skilled in the art to understand or implement the present application. Various modifications to these embodiments will be readily apparent to those skilled in the art, and the generic principles defined herein may be applied to other embodiments without departing from the spirit or scope of the present application. Thus, the present application is not limited to the embodiments shown herein but is to be accorded the widest scope consistent with the principles and novel features disclosed herein.

## Claims

1. A cyclophosphazene compound containing a triphenylsilyl side group, **characterised in that** at least one phenylsilyl side group is connected to a phosphorus atom in the cyclophosphazene compound, and the phosphorus atom and the phenylsilyl side group are connected by means of an oxygen atom;
the structural formula of the cyclophosphazene compound is as represented by formula 1, 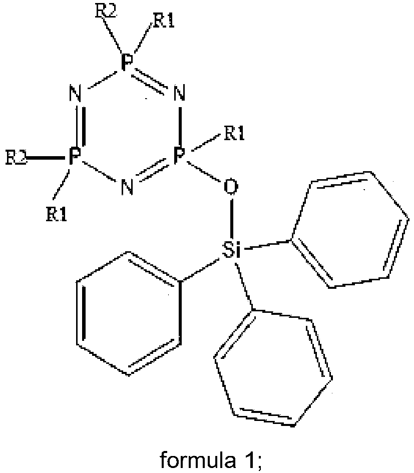
wherein in the formula 1,
R1 is a halogen atom or a trifluoroethanol group; and
R2 is at least one of a halogen atom, a trifluoroethanol group, and a silicon-benzene structure.

2. The cyclophosphazene compound according to claim 1, **characterised in that** the cyclophosphazene compound has a molecular structure as represented by formula 2,

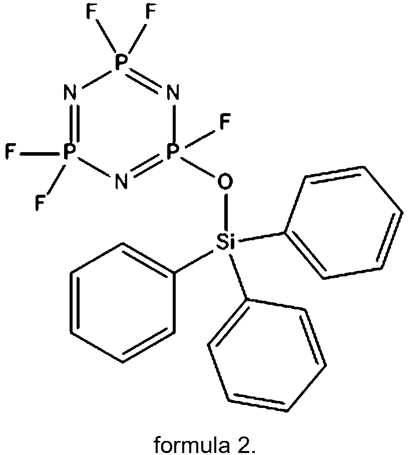

3. The cyclophosphazene compound according to claim 1, **characterised in that** the cyclophosphazene compound has a molecular structure as represented by formula 3,

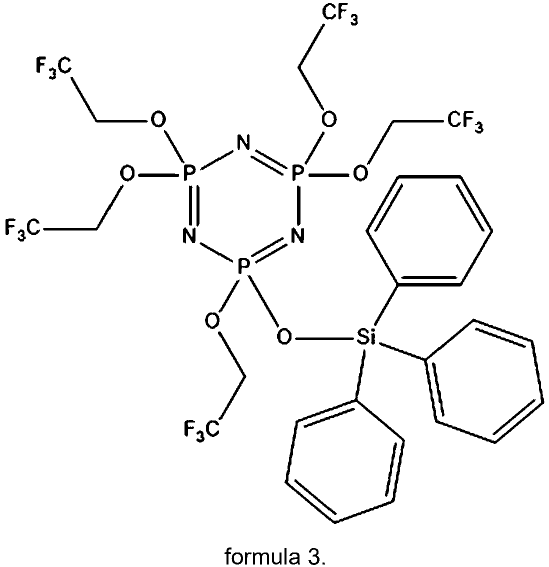

4. A method for preparing the cyclophosphazene compound according to any one of claims 1 to 3, **characterised by** comprising:
adding triphenylsilanol to an organic suspension liquid of a strong base, and subjecting same to primary stirring, so as to obtain a first mixed solution containing a triphenylsilanol organic salt;
adding the first mixed solution to a phosphonitrilic chloride trimer, subjecting same to secondary stirring, and then subjecting same to tertiary stirring and filtration, so as to obtain a first filtrate; and
subjecting the first filtrate to vacuum drying, so as to obtain the cyclophosphazene compound;
wherein solvents for the strong base, the phosphonitrilic chloride trimer, and the first mixed solution are each a low-boiling-point inert aprotic solvent.

5. The method according to claim 4, **characterised in that** a molar ratio of the triphenylsilanol organic salt to the phosphonitrilic chloride trimer is 1 to 6.

6. A method for preparing the cyclophosphazene compound according to any one of claims 1 to 3, **characterised by** comprising:
adding triphenylsilanol to an organic suspension liquid of a strong base, and subjecting same to primary stirring, so as to obtain a first mixed solution containing a triphenylsilanol organic salt;
adding trifluoroethanol to an organic suspension liquid of a strong base, and subjecting same to primary stirring, so as to obtain a second mixed solution containing a trifluoroethanol organic salt;
adding the first mixed solution to a phosphonitrilic chloride trimer, subjecting same to secondary stirring, then adding the second mixed solution and subjecting same to the secondary stirring, and then subjecting same to tertiary stirring and filtration, so as to obtain a second filtrate; and
subjecting the second filtrate to vacuum drying, so as to obtain the cyclophosphazene compound;
wherein solvents for the strong base, the first mixed solution, the second mixed solution, and the phosphonitrilic chloride trimer are each a low-boiling-point inert aprotic solvent.

7. The method according to claim 6, **characterised in that** the second mixed solution, the first mixed solution, and the phosphonitrilic chloride trimer satisfy:
M + N = 6Q, and M:N = 5 to 1/5;
wherein M represents a molar amount of the trifluoroethanol organic salt; N represents a molar amount of the triphenylsilanol organic salt; and Q represents a molar amount of the phosphonitrilic chloride trimer.

8. The method according to claim 6, **characterised in that** the low-boiling-point inert aprotic solvent comprises at least one of tetrahydrofuran, diethyl ether, acetone, dioxolane, dioxane, toluene, and xylene.

9. The method according to claim 6, **characterised in that** the primary stirring lasts for 4 h to 12 h; and/or,
the secondary stirring lasts for 4 h to 24 h; and/or,
the tertiary stirring lasts for 12 h to 24 h at 30°C to 60°C.

10. Use of a cyclophosphazene compound containing a triphenylsilyl side group, **characterised in that** the use comprises the cyclophosphazene compound according to any one of claims 1 to 3 being used as a flame retardant of an electrolyte solution for lithium batteries.
